# EUROPÄISCHE PATENTSCHRIFT

(11) **EP 1 703 343 B1**
(45) Veröffentlichungstag und Bekanntmachung des Hinweises auf die Patenterteilung: **13.05.2009**
(21) Anmeldenummer: 06003646.4
(22) Anmeldetag: 22.02.2006
(51) Int. Cl.: G05B 13/04, H01Q 3/26, G06F 17/16

(54) **Parallelisierte Optimierung von Parametern zur Steuerung eines Systems**
Parallelized optimisation of parameters to control a system
Optimisation parallèlisée de parametres pour controller un système

(30) Priorität: 14.03.2005 DE 102005011936; 27.05.2005 DE 102005024304
(43) Veröffentlichungstag der Anmeldung: 20.09.2006
(73) Patentinhaber: Fraunhofer-Gesellschaft zur Förderung der angewandten Forschung e.V., 80686 München (DE)
(72) Erfinder: Frühauf, Hans Holm, 91058 Erlangen (DE); Böhner, Martin, 90765 Fürth (DE); Kokai, Gabriella, 91056 Erlangen (DE)
(74) Vertreter: Stöckeler, Ferdinand

(56) Entgegenhaltungen:
- US-A1- 2003 202 479
- MANIEZZO V ET AL: "An ANTS heuristic for the frequency assignment problem" FUTURE GENERATIONS COMPUTER SYSTEMS, ELSEVIER SCIENCE PUBLISHERS. AMSTERDAM, NL, Bd. 16, Nr. 8, Juni 2000 (2000-06), Seiten 927-935, XP004205062 ISSN: 0167-739X
- ISLAM M T ET AL: "A parallel ant colony optimization algorithm for all-pair routing in MANETs" PARALLEL AND DISTRIBUTED PROCESSING SYMPOSIUM, 2003. PROCEEDINGS. INTERNATIONAL APRIL 22-26, 2003, PISCATAWAY, NJ, USA,IEEE, 22. April 2003 (2003-04-22), Seiten 259-266, XP010645524 ISBN: 0-7695-1926-1
- RANDALL M ET AL: "A Parallel Implementation of Ant Colony Optimization" JOURNAL OF PARALLEL AND DISTRIBUTED COMPUTING, ELSEVIER, AMSTERDAM, NL, Bd. 62, Nr. 9, September 2002 (2002-09), Seiten 1421-1432, XP004408676 ISSN: 0743-7315

## Beschreibung

Die vorliegende Erfindung bezieht sich auf eine Vorrichtung zum Optimieren von Steuerparametern eines Systems, wie sie beispielsweise für die Optimierung der die Richtcharakteristik eines steuerbaren Gruppenantennensystems steuernden Steuerparameter verwendet werden kann.

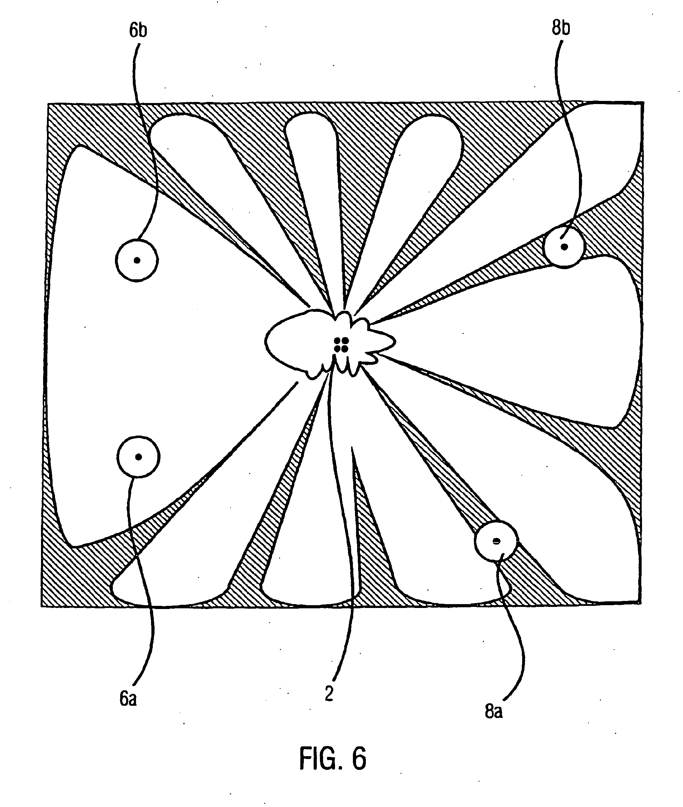

In vielen technischen Anwendungen ist es das Ziel, Parameter, die ein System steuern oder regeln, schnellstmöglich zu optimieren, um das System in einen zur Lösung der Aufgabe günstigen Zustand zu überführen. Beispielsweise ist es im Bereich der mobilen Telekommunikation erforderlich, die Sendeleistung einer Basisstation so auf ein steuerbares Antennensystem zu verteilen, dass bevorzugte mobile Endgeräte bzw. Handys aufgrund der Richtcharakteristik des Antennensystems bestmöglich versorgt werden, wohingegen andere Handys, die zwar auf derselben Frequenz, nicht jedoch mit derselben Basisstation kommunizieren, sich in einem Raumbereich befinden können, in dem die Sendeleistung des Antennensystems sehr gering ist. Diese Anforderung ist in der Abbildung in Fig. 6 grafisch dargestellt.

Fig. 6 zeigt die Richtcharakteristik (Verteilung der elektrischen Feldstärke) eines Antennensystems bzw. einer Antennengruppe 2, die aus vier einzelnen Antennen besteht. Dargestellt ist die zweidimensionale Projektion der Leistungsdichte des elektromagnetischen Feldes, das von dem Antennenfeld 2 erzeugt wird und das durch den hell schraffierten Bereich dargestellt ist, wobei die helleren Bereiche Bereiche mit höherer Leistungsdichte angeben. Gezeigt ist ferner die Position von zwei bevorzugten Mobilfunkgeräten 6a und 6b und die Position von zwei störenden Mobilfunkgeräten 8a und 8b.

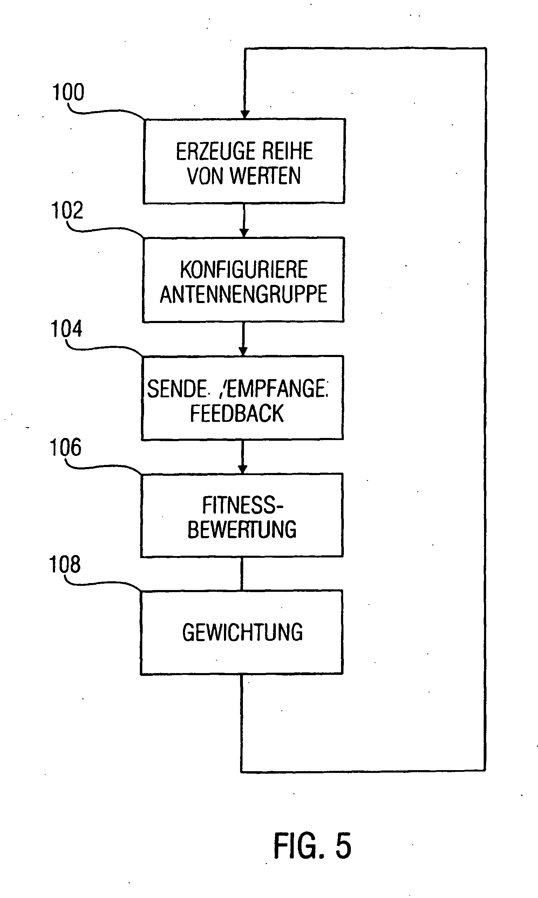

Wie es in Fig. 6 zu sehen ist, befinden sich wunschgemäß die bevorzugten Mobilfunkgeräte 6a und 6b in einem gut versorgten Bereich, d. h. in einem Bereich in dem die Sendefeldstärke des Antennenfeldes 2 hoch ist. Hingegen befinden sich die störenden Mobilfunkgeräte 8a und 8b in einem Bereich geringer Sendeleistung, sodass keine Sendeleistung der Basisstation zur Abdeckung eines Raumbereiches verwendet wird, in dem sich lediglich Mobilfunkgeräte befinden, mit denen keine Kommunikation stattfinden soll. Abbildung 5 zeigt also anhand eines konkreten Beispiels, wie die Richtcharakteristik des Antennenfeldes 2 an die Erfordernisse des Mobilfunknetzes angepasst werden soll, wobei die bevorzugten Mobilfunkgeräte 6a und 6b bestmöglich abgedeckt und die störenden Mobilfunkgeräte 8a und 8b bestmöglich unterdrückt werden.

Um die Richtcharakteristik einer Gruppenantenne bzw. eines Antennenfeldes adaptiv auf sich zeitlich verändernde Anforderungen anzupassen, sind eine Reihe von Hardware-Parametern während des Betriebes zu justieren. Diese Einstellungen haben, wie es in Fig. 6 zu sehen ist, erheblichen Einfluss auf die Empfangsqualität der Signale statischer und mobiler Funkteilnehmer innerhalb der Reichweite der Gruppenantenne. Dabei ist insbesondere zu beachten, dass im Falle eines Mobilfunknetzes die Empfänger beweglich sind, wobei die Position der Funkteilnehmer nicht notwendigerweise bekannt ist. Zusätzlich sind die Funkteilnehmer nicht notwendigerweise kontinuierlich aktiv. Demnach können Funkteilnehmer "erscheinen" oder "plötzlich verschwinden". Um die Richtcharakteristik einer Gruppenantenne in so einem Fall optimal einzustellen, kann man sich des so genannten blinden adaptiven Beamformings bedienen. Beim blinden adaptiven Beamforming wird die Einstellung und kontinuierliche Anpassung der Richtcharakteristik einer elektrisch bzw. elektronisch steuerbaren Gruppenantenne vorgenommen, ohne notwendigerweise die Richtcharakteristik zu messen, simulieren oder anderweitig zu kennen. Als Kriterium für die Güte der Richtcharakteristik wird statt dessen ein so genannter Fitnesswert bestimmt, der aus den charakteristischen Parametern des elektrischen Feldes oder der Signalstatistik der Gruppenantenne an der Position der Funkteilnehmer bestimmt wird. Dieser kann beispielsweise aus der Feldstärke, dem Signal-Rauschverhältnis oder der Bitfehlerrate des übertragenen Signals abgeleitet werden.

In der dynamischen Umgebung eines Mobilfunknetzes ist dabei bedeutsam, dass sich während eines Optimierungsprozesses die Umgebung und damit auch die Bewertungskriterien ändern. Entscheidend für die Suche nach den optimalen Parametern, also für die Optimierung, ist, ob die Änderung der Umgebung kontinuierlich abläuft oder in diskreten Zeitabständen. Im ersten Fall der kontinuierlich ablaufenden Veränderungen bedeutet dies, dass im Extremfall jede zu bewertende Lösung bzw. Antennenkonfiguration während der Optimierung in einer anderen Umgebung bewertet wird, als die anderen Kandidaten, also als die im Laufe der Optimierung bereits ermittelten Sätze von Parametern. Diese Umgebungsänderungen mögen zwar relativ moderat ausfallen, sind aber dennoch gegeben. Das Adaptionsverfahren muss demnach eine gewisse Toleranz gegenüber diesen ungleichen Bedingungen aufweisen. Dies ist erforderlich, um einen Fall zu vermeiden, in dem sich zwischen zwei aufeinander folgenden Fitnessbewertungen die Konstellation des Systems durch die sich bewegenden Handys derart geändert hat, dass trotz eines sich verschlechternden Fitnesswerts die Richtcharakteristik des Antennenfeldes immer noch optimal ist, wie es beispielsweise der Fall wäre, wenn sich in Fig. 6 eines der bevorzugten Handys 6a oder 6b radial vom Zentrum, dem Ort der Antennen, wegbewegen würde. Deswegen ist es erforderlich, dass ein Verfahren verwendet wird, das schnell gegen eine günstige Konfiguration des Systems konvergiert.

Um adaptives Beamforming zu implementieren, werden unter anderem genetische Algorithmen angewendet, die in Form eines Programmes ausgeführt werden. Die genetischen Algorithmen gehören zur Familie der evolutionären Algorithmen, die auf den Beobachtungen natürlicher Evolution beruhen, wo sich Arten durch Replikation, Variation und Selektion wechselnden Umweltbedingungen anpassen. Genetische Algorithmen können im Prinzip auf aufwendige Art und Weise in Hardware implementiert werden. Das Problem dieser Verfahren ist die niedrige Adaptionsrate, also eine niedrige Geschwindigkeit, mit der sich die Algorithmen veränderlichen Umgebungen anpassen können.

Genetische Algorithmen können daher bisher nur in statischen bzw. semi-statischen Umgebungen erfolgreich eingesetzt werden. Aus diesem Grund ist ihr Einsatz zum Optimieren der Richtcharakteristik eines Mobilfunkantennensystems nicht möglich, Hardwareimplementierungen genetischer Algorithmen zum Beamforming sind bisher nicht realisiert. Auch für andere Optimierungsprobleme, in denen eine schnelle Lösungsfindung essentiell ist, eignen sich diese Algorithmen nur eingeschränkt.

Die europäische Patentschrift EP 1 021 752 B1 zeigt ein adaptives Steuersystem für einen stabilen, kontrollierbaren und direkt wirkenden oder umgekehrt direkt wirkenden, industriellen Open-Loop-Prozess mit einem Prozesseingang (u(t)), einem Prozessausgang (x(t), der einen Bestandteil einer gemessenen Prozessvariablen (y(t)) ist, einer Empfindlichkeitsfunktion, die das Verhältnis δy (t)/ δu (t) zwischen den partiellen Ableitungen in Bezug auf die Zeit des genannten Prozessausgangs (x(t)) und dem genannten Prozesseingang (u(t)) ist, und einer Steuerzielfunktion Eₛ(t), die von dem Fehlerwert (e(t)) errechnet wird, der die Differenz zwischen einer gemessenen Prozessvariablen (y(t)) und einem gewählten Sollwert (r(t)) ist.

Schätz- und Reglungsverfahren werden dazu verwendet, als Feedback - Wert eines Systems die Differenz einer tatsächlich beobachteten zu einer Sollgröße zu minimieren. Typischerweise ist das Ziel, den mittleren quadratischen Fehler und somit die Schwankungsbreite dieses Feedbacks zu minimieren. Diese Verfahren werden als LMS (Least Mean Square) Verfahren bezeichnet. Beispiele für Filter, die diese Minimierung erreichen sind Kalman-Filter oder Wiener-Filter, wie es beispielsweise in dem Lehrbuch "Statistische Nachrichtentheorie", Kristian Kroschel, Springer-Verlag, 1988, beschrieben ist.

Die deutsche Patentschrift 31 44 052 C2 beschreibt eine akustische Dämpfungseinrichtung, bei der ein gemessenes Schallsignal durch akustisches Überlagern eines gegenphasigen Schallsignals eliminiert werden soll. Dabei verwendet das in der DE 31 44 052 C2 verwendete Verfahren einen LMS-Algorithmus, um in einen adaptiven Filterungsprozess ein gemessenes Fehlersignal, das die Differenz zwischen einer gewünschten und einer tatsächlich gemessenen Messgröße darstellt, zu minimieren.

Die US Patentschrift 2004/0143560 A1 beschreibt ein Wegesuchsystem, das auf einem Ameisenalgorithmus basiert und einen Grapherzeuger, eine Wegsucheinheit, ein Speichermedium und einen Wegoptimierer aufweist. Dabei wird der Ameisenalgorithmus in seiner seriellen Form dazu verwendet, eine optimale Wegstrecke zu finden.

Maniezzo V et al. beschreiben in "An ANTS heuristic for the frequency assignment problem" Future Generations Computer Systems, Elsevier Science Publishers. Amsterdam, NL, Bd. 16, Nr. 8, Juni 2000 (2000-06), Seiten 927-935, XP004205062 ISSN: 0167-739X) die Anwendung eines auf dem Ameisenalgorithmus basierenden Verfahrens auf das Problem der Frequenzzuteilung in Kommunikationssystemen. Dabei wird der serielle Ameisenalgorithmus auf das Problem der Frequenzselektion angepasst, wobei neu Lösungen unter Anwendung einer strengen Deterministik bestimmt werden.

Islam M T et al. beschreiben in "A parallel ant colony otpimization algorithm for all-pair routing in MANETs", Parallel and distributed Processing Symposium, 2003. Proceedings. International April 22-26, 2003, Piscataway, NJ, USA, IEEE, 22. April 2003 (2003-04-22), die Anwendung eines Ameisenalgorithmus zum Erzeugen dynamischer Routen in einem mobilen Ad Hoc Netzwerk. Dabei werden die Routen von einzelnen Agenten sequentiell erzeugt.

Randall M et al. beschreiben in "A Parallel Implementation of Ant Colony Optimization", Journal of Parallel and Distributed Computing, Elsevier, Amsterdam, NL, Bd. 62, Nr. 9, September 2002 (2002-09), Seiten 1421-1432, XP004408676 ISSN: 0743-7315) die Möglichkeiten zur Parallelisierung von Ameisenalgorithmen, um diese effizient auf parallelisierten Computersystemen zur Anwendung zu bringen. Zum einen wird vorgeschlagen, mehrere Ameisenalgorithmen (Kolonien) parallel auf verschiedenen Prozessoren zu berechnen. In einer Modifikation können diese unterschiedlichen Kolonien miteinander Informationen austauschen, um eventuell das Finden einer konvergenten Lösung zu beschleunigen. Ein weiterer Vorschlag ist das Verwenden von mehreren Ameisen, welche jeweils auf einzelnen Prozessoren berechnet werden. Dabei erzeugt jede einzelne Ameise (Agent) eine einzelne vollständige Lösung durch sequentielles Abarbeiten des sequentiellen Ameisenalgorithmus.

Huang Jian et al. beschreiben in der US Patentanmeldung 2003/202479A1 wie eine Route in einem Kommunikationssystem gefunden werden kann. Dabei sind die Auswahlkriterien, die das Finden des nächsten Routenpunktes vom aktuellen Routenpunkt aus beschreiben dem Ameisenalgorithmus entlehnt, wobei ein Agent eine vollständige Route durch das Netzwerk durch sequentielles abschreiten verschiedener Routenpunkte (Hops) erzeugt.

Die Aufgabe der vorliegenden Erfindung besteht darin, eine Vorrichtung und ein Verfahren zu schaffen, das auf schnelle und effiziente Art und Weise die Optimierung von Parametern eines Systems erlaubt.

Diese Aufgabe wird durch eine Vorrichtung gemäß Anspruch 1 und ein Verfahren gemäß Anspruch 16 gelöst.

Der vorliegenden Erfindung liegt die Erkenntnis zugrunde, dass eine Vielzahl von Steuerparametern eines Systems schnell optimiert werden können, wenn ein Feedback, das die Qualität der Steuerparameter beschreibt, dazu verwendet wird, vorteilhaften Parametern ein höheres Gewicht zuzuweisen als nachteilhaften, und wenn auf Grundlage der Gewichte eine parallelisierte Erzeugung eines neuen Satzes von Steuerparametern erfolgt. Durch die Parallelisierung des Optimierverfahrens unter Benutzung eines Feedback- oder Fitnesswertes wird der Optimierungsvorgang so beschleunigt, sodass er auch in Szenarien angewendet werden kann, in denen eine Reaktion auf eine Veränderung annähernd in Echtzeit erfolgen muss.

Ein Parameter eines Systems kann dabei aus einem oder mehreren Werten bestehen bzw. zusammengesetzt sein, wobei die Werte einen Parameter mathematisch beschreiben. So kann ein Parameter, für den prinzipiell 256 verschiedene Einstellungen möglich sind, zum Einen durch eine Folge von 8 aufeinanderfolgenden Bits repräsentiert werden, zum Anderen als ganze Zahl zwischen 0 und 255. Im ersten Fall ist die mathematische Abstraktion des Parameters also ein Bitvektor, wobei im Zuge einer Optimierung jeweils die einzelnen Bits verändert werden (ein Bit kann 0 oder 1 sein), während im zweiten Fall während der Optimierung jeweils eine ganze Zahl zwischen 0 und 255 verändert wird. Für eine Optimierung ist die mathematische Abstraktion des Problems, also die Darstellung physikalischer Parameter geeignet zu wählen und implementierungsabhängig. Für die Funktionsweise des eigentlichen Optimierungsalgorithmus selbst ist die mathematische Darstellung der Parameter unrelevant.

Je nach Darstellung des Problems kann ein Parameter also einem einzelnen Wert entsprechen mehrere Werte umfassen.

Im Fall der Steuerung einer Antennengruppe können die Parameter beispielsweise Amplituden- und Phasensteuerungssignale sein, die zu optimieren sind. Kann jedes der Steuersignale 256 verschiedene Werte annehmen, ist also eine Beschreibung eines Parameters als Bitvektor bestehend aus 8 einzelnen Bits oder alternativ dazu als Ganze Zahl zwischen 0 und 255 möglich.

Bei einem speziellen Ausführungsbeispiel der vorliegenden Erfindung wird zur Optimierung von Steuerparametern einer Gruppenantenne eine Vorrichtung verwendet, die auf einer hoch parallelisierten Hardwareimplementierung eines Ameisenalgorithmus (Ant Colony Optimisation, ACO) beruht. Der Ameisenalgorithmus ist an sich ein nahezu perfekt serieller Algorithmus, bei dem eine Ameise bzw. ein so genannter Agent eine Reihe von Wegpunkten nacheinander abschreitet, wobei an jedem einzelnen Wegpunkt die Entscheidung getroffen werden muss, welches der nächste Wegpunkt zum Erreichen eines Zieles sein soll. Die einzelnen Wegpunkte werden durch die Agenten also sequenziell abgeschritten, benötigt beispielsweise jeder Schritt einen Zyklus, beispielsweise einen Taktzyklus, ist eine erhebliche Anzahl von Zyklen zur Erzeugung eines einzigen Weges bzw. einer einzigen möglichen Lösung erforderlich. Der besondere Vorteil der vorliegenden Erfindung besteht darin, dass der Ameisenalgorithmus in der erfindungsgemäßen Vorrichtung zum Optimieren der Parameter eines Systems so modifiziert ist, dass nicht ein einzelner Agent eine Vielzahl von Wegpunkten hintereinander abschreitet, sondern dass eine Anzahl von Agenten, die der Anzahl von Wegpunkten entspricht, in nur einem einzigen Zyklus jeweils nur eine einzige Wegentscheidung treffen. Der sich ergebende Gesamtweg lässt sich in einem weiteren Schritt aus den einzelnen Teilabschnitten der durch die einzelnen Agenten bestimmten Wegstücke zusammensetzten. Durch die hochgradige Parallelisierung der Suche nach neuen gültigen Lösungen kann die Geschwindigkeit der Implementierung signifikant erhöht werden, sodass mit dem Ausführungsbeispiel der vorliegenden Erfindung unter anderem das blinde Beamforming und die dazu erforderliche Optimierung von Steuerparametern auch in dynamischen Umgebungen realisierbar ist.

Bei einem weiteren Ausführungsbeispiel der vorliegenden Erfindung wird die Vorrichtung zum Optimieren von Steuerparametern in einer hoch parallelen digitalen Schaltung umgesetzt. Das Verwenden einer digitalen Schaltung ermöglicht es dabei insbesondere, das Optimieren von Parametern unter Ausnutzung der parallelen Verarbeitungsmöglichkeit auf einem FPGA oder einem ASIC zu implementieren. Dadurch wird die Adaptionsgeschwindigkeit des zugrunde liegenden Ameisenalgorithmusses so gesteigert, dass die Vorrichtung auch in Echtzeitsystemen angewendet werden kann. Dies gilt insbesondere auch für den Einsatz zur dynamischen Einstellung und Nachführung der Richtcharakteristik von Gruppenantennen.

Bei einem weiteren Ausführungsbeispiel der vorliegenden Erfindung wird die Erzeugung eines jeden einzelnen Parameters des zu optimierenden Satzes von Parametern von einer digitalen Schaltung vorgenommen, wobei die Information, ob der aktuell erzeugte Parameter einem erfolgreichen Satz von Parametern angehört oder nicht, ebenfalls in der dem Parameter zugeordneten digitalen Schaltung gespeichert wird. Dabei sind insbesondere die Speicher und die digitalen Schaltungselemente, die zum Erzeugen eines einzelnen Parameters erforderlich sind, so ausgelegt, dass keine rechenzeitintensiven Fließkommaberechnungen oder Divisionen bzw. Multiplikationen auftreten. Mit der erfindungsgemäßen Schaltung ist es möglich, die Erzeugung eines Parameters und dessen Fitnessbewertung in einer minimalen Anzahl von Taktzyklen zu ermöglichen.

Bei einem weiteren Ausführungsbeispiel der vorliegenden Erfindung wird die Vorrichtung zum Optimieren von Steuerparametern in einer Mobilfunksendestation dafür eingesetzt, um die Steuerparameter einer Antennengruppe, wie z. B. Amplitude und Phase einer jeden Antenne, zu optimieren, sodass die Sendefeldstärke an einer Mehrzahl von Empfängern, die mit der Sendestation kommunizieren, einen unter den geometrischen Rahmenbedingungen bestmöglichen Wert erreicht. Durch Einsatz der hoch parallelisierten Hardware zur Optimierung der Parameter des Antennenfeldes kann erreicht werden, dass sich die Richtcharakteristik der Antennengruppe in Echtzeit den sich verändernden geometrischen Bedingungen anpasst, was mit den bisherigen Methoden zur Adaption der Richtcharakteristik nicht möglich war.

Bevorzugte Ausführungsbeispiele der vorliegenden Erfindung werden nachfolgend Bezug nehmend auf die beiliegenden Zeichnungen detailliert erläutert. Es zeigen:
- Fig. 1: Ameisenalgorithmus zum Finden einer optimalen Lösung.
- Fig. 2: Digitale Schaltung zur Optimierung von Steuerparametern.
- Fig. 3: Digitale Schaltung zur Erzeugung eines einzelnen Parameters der digitalen Schaltung in Fig. 2.
- Fig. 4: Zustandsdiagramm zum Beschreiben des Ablaufs des erfindungsgemäß implementierten Optimierverfahrens.
- Fig. 5: Flussdiagramm des Ameisen-Algorithmus Optimierverfahrens.
- Fig. 6: Richtcharakteristik einer Gruppenantenne bestehend aus vier Einzelantennen.

Im Folgenden wird die grundlegende Idee eines Ameisenalgorithmus und die Modifikation hin zu einer Parallelisierung des ursprünglich seriellen Ameisenalgorithmus gemäß der vorliegenden Erfindung näher erläutert. Bei Ameisenalgorithmen handelt es sich um Multi-Agentensysteme, die ursprünglich für die Lösung des Travelling Salesman Problems (TSP) entwickelt wurden. Ein Agent entspricht dabei, dem Beispiel aus der Natur folgend, einer Ameise. Die Besonderheit besteht dabei darin, dass die natürlichen Vorbilder der Agenten, die Ameisen, nicht direkt miteinander kommunizieren, sondern indirekt, indem sie ihre Umwelt verändern. Die Ameisen legen dazu Pheromonspuren entlang ihrer Wege ab. Nachfolgende Ameisen werden durch diese Pheromonspuren in ihrer Wegewahl beeinflusst.

Um das zugrunde liegende Prinzip der vorliegenden Erfindung zu verstehen, soll im Folgenden kurz anhand eines virtuellen Versuchsaufbaus die Funktionsweise des Ameisenalgorithmus erläutert werden.

Dazu betrachtet man eine Kolonie von Ameisen, die von ihrem Nest auf einem langen und einem kurzen Weg einen Futterplatz erreichen können. Die Besonderheit ist, dass die einzelnen Ameisen eines Nestes nicht unmittelbar miteinander kommunizieren, sondern durch eine leichte Veränderung ihrer Umwelt. Entlang ihres Weges vom Nest zur Futterquelle und zurück deponieren die Ameisen eine chemische Substanz (Pheromon) auf dem Boden. Diese Pheromonspuren können alle Ameisen riechen. Kommt eine Ameise an eine Weggabelung, so entscheidet sie sich probabilistisch für einen der möglichen Abzweige. Je intensiver die Pheromonspur auf einem solche Abzweig ist, desto größer ist die Wahrscheinlichkeit, dass eine Ameise den entsprechenden Weg wählt. Bei ihrem ersten Gang durch den Versuchsaufbau entscheidet sich eine Ameise also rein zufällig für einen der beiden Wege.

Angenommen, eine Ameise geht den kurzen und eine zweite den langen Weg zur Futterquelle, so wird die Ameise auf dem kurzen Weg schneller bei der Futterquelle ankommen. Auf ihrem anschließenden Weg zurück zum Nest entscheidet sie sich aufgrund ihrer eigenen Pheromonspur mit einer größeren Wahrscheinlichkeit wieder für den kürzeren Weg, was die Attraktivität dieses Wegs für die nachfolgende Ameise weiter steigert. Dieser Vorgang wiederholt sich mit jedem Individuum des Ameisennestes. Im Laufe der Zeit steigt dabei der Pheromonanteil auf dem kürzeren Wegstück schneller an, als auf dem langen, was dazu führt, dass nach und nach (nahezu) alle Ameisen den kürzeren Weg nutzen. Zusätzlich dazu verflüchtigt sich die Pheromonspur mit der Zeit wieder. Das fördert zum einen das schnellere Auffinden des kürzesten Weges, weil eine rasch Konvergenz hin zu einer suboptimalen Lösung vermieden wird. Daneben ermöglicht es den Ameisen, sich veränderten Gegebenheiten anzupassen.

Angenommen auf dem bisher kürzesten Weg wird ein Hindernis aufgestellt, so gestattet es die Verdunstung, dass die Ameisen mit der Zeit einen neuen festen Pfad auswählen können, ohne von ihrer eigenen früheren Pheromonspur in die Irre geleitet zu werden.

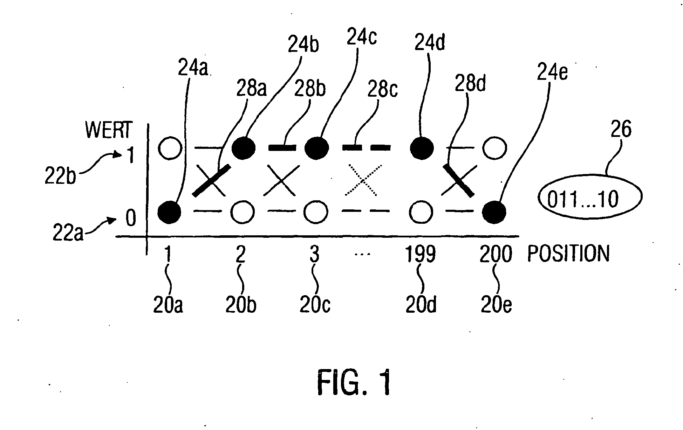

Voraussetzung für eine Optimierung mittels ACO ist unter anderem eine Problemrepräsentation als Graph, dessen Kanten Teile einer möglichen Problemlösung darstellen. Charakteristisch für das der vorliegenden Erfindung zugrundeliegende ACO-Verfahren ist die Reihenfolge, die eine Ameise bei ihrem Weg durch den Graphen einzuhalten hat, wie es in Fig. 1 zu sehen ist.

Fig. 1 zeigt die Bitrepräsentation der Parametereinstellungen einer Antennengruppe. In Fig. 1 sind fünf Werte 20a-20e der 200 zu optimierenden Werte, die sämtlich möglichen Einstellungen einer Antennengruppe beschreiben, zu sehen. Entsprechend der 1-Bit-Darstellung kann jeder der Werte bzw. Parameter 20a-20e einen Wert von 0 oder 1 annehmen, wie es die Zeilen 22a und 22b in Fig. 1 zeigen. Dargestellt sind ferner die momentan ausgewählten Parameterwerte 24a-24e, die durch ausgefüllte Kreise repräsentiert sind. Des weiteren sind die, zwei benachbarte ausgewählte Parameterwerte verbindenden Linien (28a-28d), welche die Analogie zu dem Ameisenalgorithmus herstellen, also einen Weg in der graphischen Wegrepräsentation definieren, fett eingezeichnet. Die prinzipiell anderen möglichen Wegstücke zwischen den Parametern 20a-20e sind dünn bzw. gestrichelt angedeutet. Die sich durch die ausgewählten Werte 24a-24e ergebende Bitrepräsentation der Antennenparameter ist in Fig. 1 als Bitvektor 26 angegeben.

Für das durch Fig. 1 repräsentierte Optimierungsproblem, stellt jedwede Kombination aus 200 Bits eine gültige Lösung dar. Neue Lösungen der Problemstellung werden dabei direkt von virtuellen Ameisen generiert, wobei die Erzeugung der Lösung auf zwei Arten realisierbar ist. In einer Pipelining-Variante werden Lösungen erzeugt, indem eine Ameise auf der linken Seite der Abbildung an dem gewählten Parameter 24a einen Weg beginnt und die einzelnen Stationen, die in Analogie zum Travelling Salesman Problem auch Städte genannt werden, sukzessive nach rechts durchläuft, bis sie bei dem Parameter 24e endet. Sobald eine Ameise ihre erste Entscheidung getroffen hat und demzufolge im Graf in Fig. 1 eine Position nach rechts voranschreitet, kann bereits eine nachfolgende Ameise an Position 1, also bei Parameter 20a mit der Konstruktion einer neuen Lösung beginnen. Die Abfolge der Entscheidungen - zwischen 0 oder 1 - einer einzelnen Ameise auf ihrem Weg durch den Grafen, bildet anschließend eine Lösung in Form eines Bitvektors.

Ameisenalgorithmen sind keine reine Abstraktion des Verhaltens echter Ameisen, sie sind vielmehr ein Ansatz, um die Lösung komplexer Optimierungsprobleme zu erhalten. Deshalb ist es sinnvoll, sie nicht allein auf die Funktionalität ihrer natürlichen Vorbilder zu beschränken, sondern sie um heuristisches Wissen z. B. um problemspezifische Funktionen zu erweitern, die keine Entsprechung in der Natur finden.

Bei einem erfindungsgemäßen Vorrichtung zum Optimieren von Steuerparametern erzeugt daher in einer parallelisierten Variante des oben beschriebenen Algorithmusses eine einzelne Ameise bzw. eine einzelner Agent keine ganze Lösung mehr, sondern lediglich eine Teillösung. Dazu sitzt auf jeder Position der Parameter 20a-20e ein einzelner Agent und trifft jeweils nur die lokal gültige Entscheidung, welchen Wert ein Bit an der Position des Agenten haben soll. Eine Gesamtlösung entsteht daraufhin aus der Aneinanderreihung sämtlicher Teillösungen.

Bei einem erfindungsgemäßen Beispiel der Optimiervorrichtung zur Steuerung einer Gruppenantenne, werden die Wege der Ameisen ausgelesen und als Bitmuster 26 zur Einstellung der Parameter der Gruppenantenne genutzt. Diese können dabei analoge, bzw. digitale Phasenschieber, sowie Amplitudenstellglieder umfassen. Durch das Senden mit gegenüber dem vorhergehenden Sendevorgang veränderten Parametern ergibt sich eine messbare Veränderung der Richtcharakteristik der Antenne, wobei die Qualität des Signals an der Position der Funkteilnehmer durch diese messbar ist. Dieser Qualitätswert wird als Fitnesswert wiederum als Eingangsgröße für den ACO-Algorithmus verwendet. Eine Rückmeldung über die Güte der gefundenen Lösung, für die nachfolgende Suche weiterer Ameisen bzw. weiterer Agenten, geschieht dabei durch Veränderung von künstlichen Pheromonspuren welche die Entscheidungen der Agenten beeinflussen. Die Auswahl geeigneter Aktualisierungsstrategien für diese Pheromonspuren ermöglicht eine gezielte Suche nach einer optimalen Lösung.

Führt in dem Ausführungsbeispiel von Fig. 1 die dort gewählte Lösung 26 beispielsweise zu einem besseren Fitnesswert als alle vorangegangenen Lösungen, werden die Pheromonspuren derart aktualisiert, dass die Wahrscheinlichkeit, dieselbe Lösung in einem weiteren Iterationsschritt erneut zu erhalten, erhöht wird.

Für die serielle Pipelining-Variante bedeutet dies, dass die Wegelemente 28a-28d, welche die bevorzugten ausgewählten Parameter 24a-24e verbinden, bei einem nächsten, bei Parameter 20a startenden Suchlauf bevorzugt beschritten werden sollen. Dies wird dadurch erreicht, dass den Wegelementen 28a-28d ein positives Gewicht zugeordnet wird. Die Entscheidung, welchen Weg ein Agent von einem ersten Parameter zu einem zweiten Parameter nimmt, hängt beim Ameisenalgorithmus, wie oben beschrieben, von einer zufälligen Komponente, also einer Zufallszahl, und einer auf den bisherigen Erfahrungen basierenden Komponente, einer künstlichen Pheromonspur ab. Die künstliche Pheromonspur kann beispielsweise so repräsentiert werden, dass eine Zufallszahl, die bei einer Entscheidung für eine von 2 Richtungen mit 50% Wahrscheinlichkeit die eine Richtung und mit 50% Wahrscheinlichkeit die zweite Richtung anzeigen wird, der bevorzugte Weg, beispielsweise 28a, mit einem zusätzlichen Gewichtungsfaktor beaufschlagt wird, wobei als Entscheidungskriterium für das Einschlagen eines Weges dann nicht mehr allein die Zufallszahl sondern das Produkt der Zufallszahl mit dem Gewichtungsfaktor herangezogen wird. In der erfindungsgemäßen Vorrichtung zum Optimieren von Parametern wird die künstliche Pheromonspur also so aktualisiert, dass dem bevorzugten Wegstück ein zusätzliches positives Gewicht beigeordnet wird, wenn der aktuelle, das Wegstück beinhaltende Weg, besser als alle vorherigen Wege ist.

In der erfindungsgemäßen parallelisierten Variante des ACO-Algorithmus bestimmt ein einzelner Agent nur noch, ob das Ergebnis eines Schrittes an der Stelle des Parameters (20a bis 20e) 0 oder 1 ist. Demzufolge ist es für den Agenten nicht erforderlich, zu wissen, ob sich der Agent eines benachbarten Parameters an der Position von Bit 1 oder Bit 0 befindet. Der Weg wird nun nicht mehr seriell konstruiert sondern besteht aus dem in einem einzelnen Schritt erzeugten Endergebnis. Entscheidend ist lediglich wo die einzelnen Agenten sich nach diesem Schritt befinden, d. h., ob der Wert bzw. der durch den Wert repräsentierte Parameter 0 oder 1 ist. Das bedeutet im Umkehrschluss, dass ein künstliches Pheromon nun nicht mehr ein Wegelement 28a-28d beschreiben wird, sondern lediglich eine Wahrscheinlichkeit angibt, mit der bei der Erzeugung eines Satzes von Parametern 20a-20e die Parameter 0 oder 1 an den 200 Stellen auftreten. Das Update der Pheromonwerte umfasst daher das Beiordnen eines Gewichtes zu einem bestimmten Zustand - 0 oder 1 - eines jeden der Parameter 20a-20e. Würde beispielsweise die in Fig. 1 gezeigte Konfiguration ein positives Feedback, also einen besseren als alle vorhergehenden Fitnesswerte, hervorrufen, würden alle ausgewählten Parameterwerte 24a-24e in Analogie zum oben beschriebenen seriellen Fall ein zusätzliches positives Gewicht erhalten.

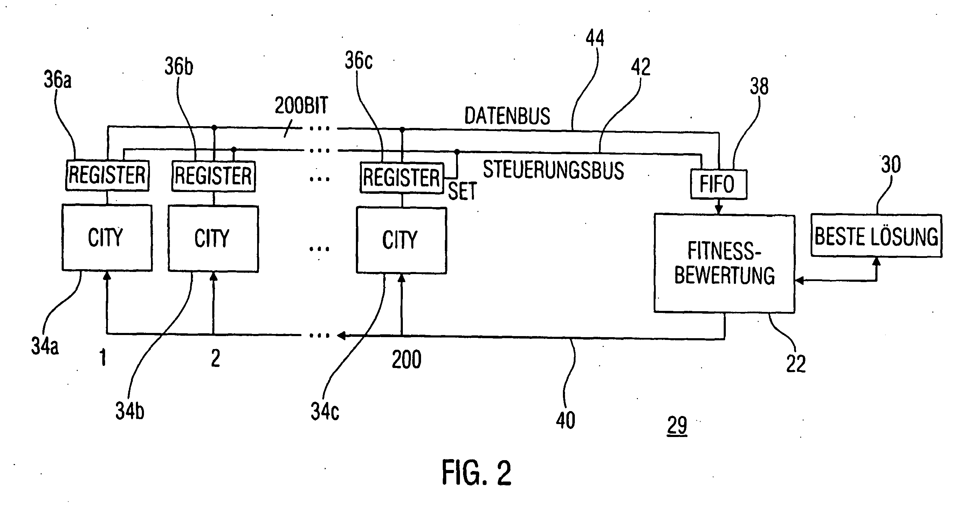

In dem Ausführungsbeispiel der vorliegenden Erfindung in Fig. 2 ist schematisch eine digitale Schaltung zum hoch parallelen Ausführen des anhand von Fig. 1 beschriebenen ACO-Algorithmus dargestellt. Gezeigt ist ein Lösungsspeicher 30, eine Fitnessbewertungseinrichtung 32, mehrere Parametererzeugeinrichtungen 34a-34c (citys), Register 36a-36c und ein FIFO-Speicher 38. Ein Ausgang der Fitnessbewertungseinrichtung 32 ist über einen Datenbus 40 mit je einem Eingang der Parametererzeugungseinrichtungen 34a-34c verbunden. Ein Ausgang der Parametererzeugungseinrichtungen 34a-34c ist mit je einem Eingang des der Parametererzeugungseinrichtung zugeordneten Registers 36a-36c verbunden. Die Register sind über einen Steuerbus 42 und einen Datenbus 44 mit je einem Eingang des FIFO-Speichers verbunden, der mit seinem Ausgang mit einem Eingang der Fitnessbewertungseinrichtung 32 verbunden ist. Der Lösungsspeicher 30 ist über eine Datenverbindung mit der Fitnessbewertungseinrichtung 32 verbunden.

In der hier vorgestellten Umsetzung wird erstmals auf die eigentlichen Ameisen komplett verzichtet, wie anhand von Fig. 1 erläutert. Statt dessen findet eine Zerlegung der eigentlichen Lösungserzeugung statt. In Fig. 2 ist schematisch ein Überblick über eine solche Zerlegung dargestellt, mit der es möglich ist, extrem schnelle Adaptionen und Optimierungen zu realisieren, sowie diese in ASIC und FPGA Technologie umzusetzen. Wie es in Fig. 2 zu sehen ist, erzeugen die einzelnen, parallel arbeitenden Parametererzeugungseinrichtungen 34a-34c (Citys) gemeinsam eine vollständige Lösung, die aus 200 einzelnen Bits besteht. Die Aufgaben der Agenten bzw. Ameisen - beeinflusst durch vorhandene Pheromonspuren an jeder Position eine Entscheidung für eine Teillösung zu treffen - werden dabei in den einzelnen Parametererzeugungseinrichtung 34a-34c erledigt. Damit diese voneinander unabhängig und parallel arbeiten können, verfügt jede der Parametererzeugungseinrichtungen 34a-34c über den Teil der künstlichen Pheromonspur bzw. des Gewichtes, der die lokale Entscheidung beeinflusst. So ist es möglich, dass sämtliche Module parallel auf die für sie relevanten Informationen zugreifen und anschließend ebenfalls parallele Teillösungen erzeugen können.

In einem Schritt der Lösungserzeugung wird also von dem Parametererzeugungseinrichtungen 34a-34c jeweils einer der Parameter erzeugt und in den Registern 36a-36c abgespeichert. Die Teillösungen werden daraufhin über den Datenbus 44 in den FIFO-Speicher 38 übertragen und dort in einer Warteschlange zur Fitnessbewertung abgelegt. Zur Fitnessbewertung ist die Fitnessbewertungseinrichtung 32 mit einem Lösungsspeicher 30 verbunden, in dem sowohl der beste bis zum Moment der aktuellen Fitnessbewertung errechnete Fitnesswert als auch die zum besten Fitnesswert gehörende Reihe von Parametern gespeichert ist. Für eine Fitnessbewertung bei der Ansteuerung einer Antennengruppe wird eine erzeugte Lösung in die Parametereinstellungen der Antennegruppe transformiert, die mit diesen Parametern konfigurierte Antennengruppe sendet zunächst an die mobilen Empfangsstationen bzw. Handys und empfängt von diesen ein Feedback, das Informationen über die Qualität des Signals am Ort des Handys enthält.

Das Feedback kann dabei beispielsweise aus der Bitfehlerrate, dem Signal/Rauschverhältnis oder der Feldstärke des elektrischen Feldes am Ort der Handys bestehen.

Aus diesem Feedback wird von der Fitnessbewertungseinrichtung 32 nach einem vorgegebenen Algorithmus ein Fitnesswert errechnet, der anschließend mit dem einem im Lösungsspeicher 30 gespeicherten besten Fitnesswert verglichen wird. Der Fitnesswert kann im einfachstem Fall direkt dem Feedback entsprechen. Um der Tatsache Rechnung zu tragen ,dass im Allgemeinen mehrere Handys versorgt werden, kann beispielsweise der Fitnesswert aus dem Mittelwert der einzelnen Feedbacks der Handys gebildet sein, oder auch durch eine komplizierter Berechnung aus den einzelnen Feedbacks bestimmt werden.

Ist der durch die aktuelle Konfiguration erhaltene Fitnesswert günstiger als der bis dahin gespeicherte beste Fitnesswert, wird der beste Fitnesswert durch den aktuellen Fitnesswert im Lösungsspeicher 30 ersetzt und es wird ebenfalls die aktuelle Reihe von Parametern als beste Reihe von Parametern im Lösungsspeicher 30 gespeichert. Je nach Qualität der Lösung erfolgt darüber hinaus über den Datenbus 44 eine Rückmeldung an das System bzw. die Parametererzeugungseinrichtungen 34a-34c, damit diese die in den Parametererzeugungseinrichtungen 34a-34c gespeicherten virtuellen Pheromonspuren bzw. Gewichte aktualisieren können.

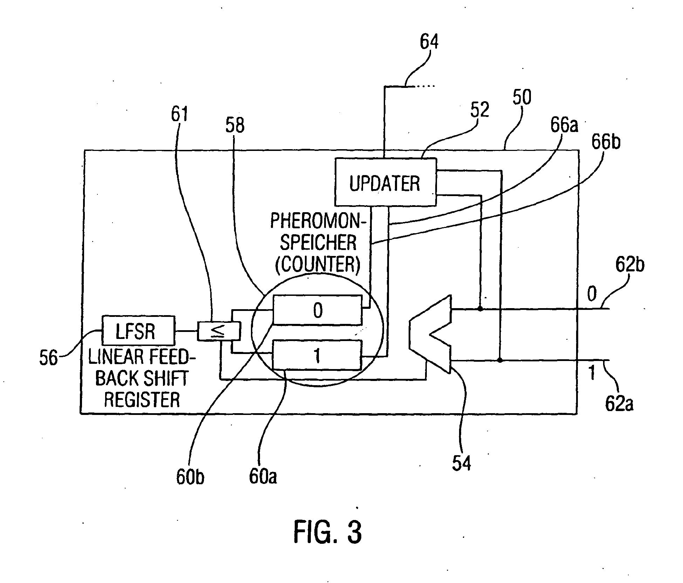

Das Update der Pheromonspuren kann dabei wie anhand von Fig. 1 beschrieben erfolgen, allgemein wird durch die Modifikation der Pheromonspuren die nachfolgende Suche in Richtung optimaler Lösungen beeinflusst. Für die detailliertere Beschreibung eines möglichen Update-Prozesses der virtuellen Pheromonspuren in den Parametererzeugungseinrichtungen 34a-34c bzw. den Citys, sei hier auch auf die Ausführungen zu Fig. 3 verwiesen.

An dieser Stelle sei besonders darauf hingewiesen, dass in dem Ausführungsbeispiel, das in Fig. 2 gezeigt ist, die Optimierung der Parameter eines dynamischen Systems erfolgt. Daher wird in regelmäßigen Abständen eine Neubewertung der bis dahin besten Lösung vorgenommen. Eine Neubewertung der bis dahin besten Lösung geschieht dabei dadurch, dass aus dem Lösungsspeicher 30 von der Fitnessbewertungseinrichtung 32 die bis dahin beste Reihe von Parametern ausgelesen wird, und die Antennengruppe mit diesen bis dahin besten Parametern konfiguriert wird. Das Feedback der Antennengruppe kann dabei durchaus schlechter ausfallen, als dies zu einem vorhergehenden Zeitpunkt mit denselben Parametern der Fall war, da sich das System ja dynamisch verändert hat, d. h. beispielsweise die Position etwaiger Handys sich verändert hat, was dazu führen kann, dass sich ein oder mehrere Handys aus räumlichen Bereichen optimaler Sendeleistung entfernt haben. Um gerade nicht im Laufe einer weiteren Optimierung einen Fitnesswert, der auf einer sich inzwischen veränderten Situation beruht, als Referenz heranzuziehen, wird diese regelmäßige Neubewertung der bis dahin besten Lösung in dynamischen Systemen vorgenommen.

Der große Vorteil dieses Ausführungsbeispiels der vorliegenden Erfindung besteht darin, dass durch die Parallelisierung die Geschwindigkeit des ACO-Algorithmusses so stark erhöht werden kann, dass eine auf einem ACO - Algorithmus basierende Anwendung in Echtzeitsystemen ermöglicht wird, insbesondere ist die Adaptionsfähigkeit der Vorrichtung hoch genug, um sogar sich ändernde Bedingungen in einem hochdynamischen System, wie es beispielsweise das System aus einer Mobilfunkstation und mehreren Handys darstellt, ermöglicht wird.

Fig. 3 zeigt eine beispielhafte Implementierung einer der Parametererzeugungseinrichtungen 34a-34c, wie sie in Fig. 2 zu sehen sind. Die Parametererzeugungseinrichtung 50 umfasst dabei eine Aktualisierungseinheit 52, einen Ausgangstreiber 54, einen Zufallszahlenerzeuger 56, einen Pheromonspeicher 58, der aus einem ersten Zähler 60a und einem zweiten Zähler 60b besteht, und einer Vergleichseinrichtung 61.

Der Ausgangstreiber 54 ist mit seinen beiden Ausgängen 62a und 62b, die die beiden Bitzustände 0 und 1 repräsentieren sowohl mit einem der Register 36a-36c, als auch mit zwei Eingängen der Aktualisierungseinheit 52 verbunden. Die Aktualisierungseinheit 52 ist über eine Datenverbindung 64 mit der Fitnessbewertungseinrichtung 32 verbunden, sowie über Leitungen 66a und 66b mit den beiden Zählern 60a und 60b des Pheromonspeichers 58. Der Zufallserzeuger 56, der durch ein Linear Feedback Shift Register gebildet sein kann, ist mit seinem Ausgang mit einem Eingang der Vergleichseinrichtung 61 verbunden, deren Ausgang wiederum mit dem Eingang des Ausgangstreibers 54 verbunden ist.

Im Folgenden werden kurz die Schritte, die zum Erzeugen eines Ausgangssignales' (0 oder 1) der Parametererzeugungseinrichtung 50 notwendig sind, dargestellt. In der gezeigten Parametererzeugungseinrichtung 50 wird von dem Zufallszahlenerzeuger 56 zunächst eine ganzzahlige Zufallszahl 1 ≤ n erzeugt. Die im Pheromonspeicher 58 gespeicherten Zählerstände der Zähler 60a und 60b repräsentieren die Anzahl von Nullen bzw. Einsen, die in zurückliegenden Schritten des Optimierverfahrens von der Parametererzeugungseinrichtung 50 erzeugt wurden, und bei denen das Feedback der Fitnessbewertungseinrichtung 32 positiv war, d. h. bei denen der zugehörige Fitnesswert der zu dem Zeitpunkt der Erzeugung beste Fitnesswert war. Die vom Zufallszahlenerzeuger 56 erzeugte ganze Zahl 1 wird an die Vergleichseinrichtung 61 übertragen, wobei diese die Zahl mit der Zahl der Einsen vergleicht, die in dem Zähler 60a gespeichert ist. Ist die Zahl der Einsen in dem Zähler 60a größer oder gleich der Zahl 1, wird von der Vergleichseinrichtung 61 der Ausgangstreiber 54 derart angesteuert, dass dieser an seinem Ausgang 62a eine logische 1 in das zur Parametererzeugungseinrichtung 50 gehörende Register überträgt. Die Entscheidung, welche Zahl von der Parametererzeugungseinrichtung 50 erzeugt wird, hängt also von einem Vergleich zweier ganzzahliger Werte ab. Dabei wird der Zufallszahlerzeuger 56 mit gleicher Wahrscheinlichkeit alle möglichen n Werte erzeugen.

Das für das ACO-Verfahren notwendige zusätzliche Gewicht, durch das eine der Möglichkeiten bevorzugt wird, wird über die Zählerstände der Zähler 60a und 60b des Pheromonspeichers 58 bereitgestellt. Das Prinzip des Anbringens der zusätzlichen Gewichte durch die Zähler 60a und 60b soll anhand eines Beispiels verdeutlicht werden. Die Zahl n sei 10 und die Vergangenheit hat mit einer höheren Wahrscheinlichkeit gute Lösungen ergeben, wenn von der Parametererzeugungseinrichtung 50 eine 1 erzeugt wurde, sodass im Pheromonspeicher der die 1 repräsentierende Zähler 60a einen Eintrag von 7 hat und der Zähler 60b einen Eintrag von 3 aufweist. Der Zufallszahlenerzeuger 56 wird mit der gleichen Wahrscheinlichkeit eine der Zahlen von 1 bis 10 erzeugen, der nachfolgende Vergleich mit dem Inhalt des Zählers 60a wird jedoch mit einer 70%-igen Wahrscheinlichkeit dazu führen, dass die Parametererzeugungseinrichtung 50 erneut eine 1 erzeugt.

Auf ähnliche Art und Weise wird basierend auf dem Ergebnis der Fitnessbewertungseinrichtung 32 (ob die aktuelle Wahl der Parameter gut oder schlecht ist), wozu diese über die Datenverbindung 64 mit der Aktualisierungseinheit kommuniziert, von der Aktualisierungseinheit 52 der Pheromonspeicher aktualisiert, so dass der für den ACO-Algorithmus typische Lerneffekt durch Anbringen statistischer Gewichte an die möglichen Lösungen sichergestellt wird. Wird beispielsweise von der Vergleichseinrichtung 61 eine 1 als Ausgabegröße der Parametererzeugungseinrichtung 50 generiert, wird diese Tatsache ebenfalls in der Aktualisierungseinheit 52 zwischengespeichert. Dabei ist die Summe der in den Zählern 60a und 60b gespeicherten Zählerstände immer n. Erfolgt nun eine positive Fitnessbewertung durch die Fitnessbewertungseinrichtung 32, erhält die Aktualisierungseinheit 52 über Datenverbindung 64 Kenntnis davon, und aktualisiert den Pheromonspeicher 58 derart, dass die 1 für zukünftige Entscheidungen ein höheres Gewicht erhält, wozu Zähler 60a inkrementiert und Zähler 60b dekrementiert wird, um, den oben gemachten Voraussetzungen folgend, die Summe der Zähler 60a und 60b konstant zu halten.

Dies bedeutet mit anderen Worten, dass die wichtigsten Bestandteile der Parametererzeugungseinrichtung 50 der Pheromonspeicher 58 in Form zweier Zähler 60a und 60b und der Zufallszahlenerzeuger 56 zur Erzeugung von Pseudo-Zufallszahlen, sowie die Aktualisierungseinheit 52 (Updater) sind. Mit Hilfe des Zufallszahlenerzeugers 56 und des Pheromonspeichers 58 trifft ein Modul bzw. eine Parametererzeugungseinrichtung 50 eine Entscheidung für einen der beiden möglichen Werte (0 oder 1). Die Aktualisierungseinheit 52 ist dafür zuständig, je nach gewählter Pheromonaktualisierungsstrategie, die Werte in den Pheromonspeichern zu aktualisieren.

Der große Vorteil der Parametererzeugungseinrichtung in Fig. 3 ist, dass das Anbringen der statistischen Gewichte durch die Implementierung der Zähler 60a und 60b sowie des Zufallszahlenerzeugers 56 und der Vergleichseinrichtung 61 keine in Hardware nur aufwendig implementierbaren Divisionen oder Multiplikationen erfordert, wie es ein Wichtungsprozess normalerweise nahe legen würde. Dies vereinfacht signifikant das Design der zu verwendenden Hardware und steigert dadurch die Effizienz des Verfahrens.

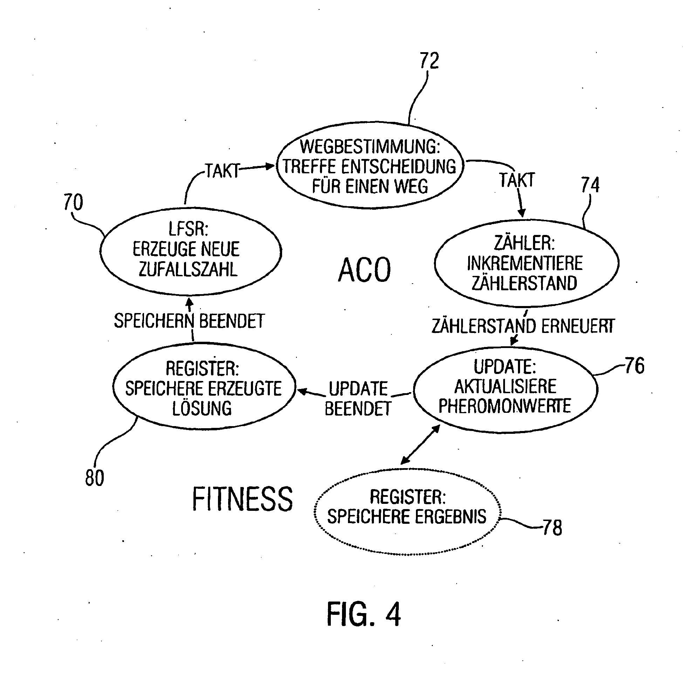

Anhand von Fig. 4 soll nun noch einmal ein vollständiger Iterationsprozess der erfindungsgemäßen Vorrichtung zum Optimieren von Steuerparametern, die in den Figuren 1 und 2 beschrieben ist, beschrieben werden. Zu Beginn wird in einem Zufallserzeugungsschritt 70 von dem Zufallserzeuger 56 eine Zufallszahl erzeugt. Während der Wegbestimmung 72 wird mit Hilfe der Zufallszahl und der Pheromonspeicher 58 von der Vergleichseinrichtung 61 ein Weg bestimmt, d. h. die Entscheidung für eine 0 oder eine 1 getroffen, wobei diese an einem der Ausgänge 62a und 62b vom Ausgangstreiber 54 bereitgestellt wird. Im nächsten Schritt 74 speichert die Aktualisierungseinheit 52 den vom Ausgangstreiber 54 bereitgestellten Wert, um damit gegebenenfalls den Pheromonspeicher 58 bzw. einen seiner Zähler 60a oder 60b zu verändern, d. h. in einem Updateschritt 76 die virtuellen Pheromonwerte zu verändern. Um die Entscheidung, wie ein Update der virtuellen Pheromonwerte stattfinden muss, zu treffen, ist von der Aktualisierungseinheit 52 gleichzeitig das Ergebnis der Fitnessbewertung heranzuziehen. Nach einem Update der Pheromonwerte wird in einem Speicherschritt 80 die im vorherigen Schritt erzeugte Lösung des Systems als beste Lösung im Lösungsspeicher 30 zusammen mit dem aktuellen Fitnesswert gespeichert, wenn der aktuelle Fitnesswert günstiger war als der bis dahin beste Fitnesswert. Nachdem das Speichern im Lösungsspeicher 30 beendet ist, kann mit dem Erzeugen von neuen Zufallszahlen durch den Zufallserzeuger 56 ein neuer Zyklus und somit ein neuer Schritt der Iteration zur Optimierung der Parameter begonnen werden.

Im Folgenden soll anhand von Fig. 5 noch einmal die prinzipielle Funktionsweise der Optimierung, wenn sie zur Steuerung einer Antennengruppe verwendet wird, dargestellt werden. Dies wird anhand eines Flussdiagrammes verdeutlicht, wobei insbesondere die Art und Weise, wie das Feedback erhalten wird, anhand von Fig. 5 noch einmal erläutert wird.

In einem ersten Wertebildungsschritt 100, wird von der erfindungsgemäßen Optimiervorrichtung eine Reihe von Werten erzeugt, wobei die Reihe von Werten die Parameter, die zur Ansteuerung einer Antennengruppe benötigt werden, wie z.B. Phase oder Amplitude der einzelnen Antennen, beschreiben.

In einem nächsten Konfigurationsschritt 102 wird die zu steuernde Antennengruppe basierend auf der Reihe von Werten konfiguriert.

Im einem Feedback-Schritt 104 wird mit der anhand der erzeugten Werte konfigurierten Antennengruppe gesendet und das Antwortsignal der mobilen Empfänger bzw. der Handys wird ausgewertet, um ein Feedback zu erhalten.

Anhand des Feedbacks kann von der Fitnessbewertungseinrichtung 32 in einem Fitnessbewertungsschritt 106 dann der Fitnesswert für die aktuelle Antennenkonfiguration errechnet werden.

Anhand des Fitnesswertes für die aktuelle Antennenkonfiguration, wird in einem Gewichtungsschritt 108 der in Schritt 100 erzeugten Reihe von Werten eine Gewichtung zugeordnet. Dies bedeutet insbesondere, dass, falls der Fitnesswert für die erzeugte Reihe von Werten besser ist als der gespeicherte beste Fitnesswert, die erzeugte Werte der Reihe von Werten ein positives Gewicht erhalten, so dass im weiteren Verlauf der Optimierung diese Werte mit höherer Wahrscheinlichkeit erzeugt werden.

Nachdem im Gewichtungsschritt 108 die Werte mit den neuen Gewichten versehen sind, beginnt der Iterationszyklus erneut.

Wird die Vorrichtung zur Optimierung von Parametern also zur Optimierung der Steuerparameter einer Antennengruppe verwendet, ist für die Ermittlung des Fitnesswertes einer Reihe von Werten (Parametern) also jeweils das Senden und Empfangen von Signalen mit der durch die erzeugten Parameter konfigurierten Antennengruppe erforderlich.

Obwohl in dem erfindungsgemäßen Ausführungsbeispiel der Vorrichtung zum Optimieren von Steuerparametern in Fig. 1 der ACO-Algorithmus für einen Parameterraum dargestellt ist, der als Einzelparameter jeweils Bits umfasst, die möglichen Entscheidungen also lediglich 0 oder 1 sind, kann der Algorithmus ohne Einschränkung auch in Ergebnisräumen angewandt werden, die eine höhere Dimension als 2 haben, d. h. in denen die möglichen Parameter 20a-20b beispielsweise von 0 bis 3 oder von 0 bis 15 reichen. Auch dann ist die erfindungsgemäße Parallelisierung des Ameisenalgorithmus ohne Einschränkung möglich.

Eine weitere Möglichkeit besteht darin, dass weniger Agenten als zu bestimmende Parameter in einer Implementierung möglich sind. Dann ist ohne Einschränkung eine Kombination des seriellen und des parallelen Verfahrens, wie sie in Fig. 1 erläutert sind, möglich, sodass beispielsweise ein einzelner Agent einen Teil eines Weges erzeugt, also beispielsweise im Sinne des seriellen Verfahrens drei aufeinander folgende Entscheidungen trifft. In diesem Szenario wäre somit eine Kombination des parallelen und des seriellen Verfahrens möglich, wobei immer noch ein erheblicher Performancegewinn durch die weitestgehende Parallelisierung erzielt werden kann.

Obwohl die Vorrichtung zum Optimieren von Steuerparametern eines Systems in dem Ausführungsbeispiel in den Fig. 1 und 2 anhand des speziellen Beispiels der Optimierung der Steuerparameter einer Gruppenantenne erläutert wurden, sind die erfindungsgemäßen Hardwareimplementierungen in den Fig. 2 und 3 dazu geeignet, jedwede Anwendung, die eine dynamische Optimierung von Parametern erfordert, zu realisieren. Insbesondere sind die erfindungsgemäßen Vorrichtungen geeignet, um andere Problemstellungen in der Kommunikationstechnik zu lösen, wie z. B. das Nachführen von WLAN-Antennensystemen, die ebenfalls aus einer größeren Anzahl von Einzelantennen bestehen können.

Die in den Abbildungen 2 und 3 gezeigten Funktionsblöcke können zur Realisierung einer parallelisierten Form des ACO-Algorithmus auch in anderer Art und Weise zusammengefasst sein, beispielsweise können die Register 36a-36c als Teil der Parametererzeugungseinrichtungen 34a-34c ausgebildet sein, der FIFO-Speicher 38 kann integraler Bestandteil der Fitnessbewertungseinrichtung 32 sein, die wiederum den Lösungsspeicher 30 umfassen kann.

Ebenso ist in Fig. 3 eine Realisierung der Parametererzeugungseinrichtung 50 möglich, in der der Pheromonspeicher 58 nur einen einzelnen Zähler umfasst, da in dem in Fig. 3 beschriebenen Szenario der Wegbestimmung durch die Vergleichseinrichtung lediglich ein Vergleich mit einem der Zähler 60a oder 60b stattfindet. Auch die Forderung, dass die Summe der Zähler 60a und 60b des Pheromonspeichers 58 konstant sein muss, kann aufgegeben werden, wenn der Entscheidungsprozess durch die Vergleichseinrichtung 61 geändert wird. Insbesondere sind auch Lösungsräume höherer Ordnung möglich, d. h. die Anzahl der Zähler des Pheromonspeichers 58 kann beliebig an die Größe des Lösungsraumes angepasst werden.

Abhängig von den Gegebenheiten kann das erfindungsgemäße Verfahren zum Optimieren von Steuerparametern eines Systems in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass das erfindungsgemäße Verfahren zum Optimieren von Steuerparametern eines Systems ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. Die Erfindung kann somit als ein Computer-Programm mit einem Programmcode zur Durchführung des Verfahrens realisiert werden, wenn das Computer-Programm auf einem Computer abläuft.

## Patentansprüche

1. Vorrichtung zum Optimierten eines oder mehrerer Steuerparameter eines Systems, die durch eine Reihe von Werten (20a-20e) definiert sind, mit folgenden Merkmalen:
einer Einrichtung (32) zum Ermitteln eines Feedbacks bei Verwendung einer gegebenen Reihe von Werten (20a-20e) durch das System;
einer Einrichtung (34a-34c) zum parallelen Zuordnen einer Gewichtung zu jedem der Werte (20a-20e) abhängig von dem Feedback; und
einer Einrichtung (34a-34c) zum parallelen Erzeugen neuer Werte unter Berücksichtigung einer Zufallskomponente und der Gewichtung von jedem der Werte, wobei die Wahrscheinlichkeit, beim Erzeugen eines neuen Wertes wieder den gegebenen Wert zu erhalten, abhängig von der Gewichtung erhöht oder erniedrigt wird.

2. Vorrichtung gemäß Anspruch 1, die ferner eine Einrichtung (32) zum Vergleichen des Feedbacks mit einem Referenz-Feedback und zum Bestimmen einer Gewichtung für die Werte (20a-20e) abhängig von dem Vergleich, aufweist.

3. Vorrichtung gemäß Anspruch 2, bei der das Referenz-Feedback einen festen Wert aufweist.

4. Vorrichtung gemäß Anspruch 2, bei der das Referenz-Feedback ein aktuell bestes Feedback darstellt.

5. Vorrichtung gemäß Anspruch 4, die einen Speicher (30) zum Speichern des aktuell besten Feedbacks und der zugeordneten Reihe von Werten, bei der das aktuell beste Feedback erhalten wurde, aufweist.

6. Vorrichtung gemäß Anspruch 5, die ausgebildet ist, um nach einer vorbestimmten Dauer das Feedback der besten Reihe von Werten neu zu ermitteln und das aktuell beste Feedback **dadurch** zu ersetzen.

7. Vorrichtung gemäß einem der Ansprüche 1 bis 6, die zuzusätzlich einen Zwischenspeicher (38) umfasst, der ausgebildet ist, um die Reihe von Werten (20a-20e) vor dem Ermitteln des Feedbacks zwischenzuspeichern.

8. Vorrichtung gemäß einem der Ansprüche 1 bis 7, die mehrere Register (36a-36c) umfasst, die ausgebildet sind, um die Werte zu speichern, und um die Reihe von Werten über einen Datenbus (44) zur Verfügung zu stellen.

9. Vorrichtung gemäß einem der Ansprüche 1 bis 8, bei der die Einrichtung zum parallelen Erzeugen neuer Werte mehrere Einzeleinrichtungen, die jeweils einem oder mehreren Werten zugeordnet sind, umfasst.

10. Vorrichtung gemäß Anspruch 9, bei der die Einzeleinrichtungen (50) eine Zufallseinrichtung (56) zum Erzeugen einer Zufallszahl umfassen.

11. Vorrichtung gemäß Anspruch 10, bei der die Zufallseinrichtung (56) ein Linear Feedback Shift Register aufweist.

12. Vorrichtung gemäß einem der Ansprüche 9 bis 11, bei der die Einzeleinrichtungen (50) einen Komparator (61) zum Vergleichen der Zufallszahl mit zumindest einem Zählerstand (60a, 60b) der von mehreren Feedbacks abhängt, und eine Einrichtung (54) zum Erzeugen des zugeordneten Werts basierend auf dem Vergleich aufweisen.

13. Vorrichtung gemäß Anspruch 12, bei der die Einzeleindichtungen (50) eine Aktualisierungseinrichtung (52) zum Aktualisieren des Zählerstands (60a, 60b) basierend auf dem Feedback und dem zur Erlangung des Feedbacks verwendeten Werts aufweist.

14. Vorrichtung gemäß einem der vorhergehenden Ansprüche, die in einer Funkstation zum Optimieren der Richtcharakteristik einer oder mehrerer Antennen derselben angebracht ist.

15. Verfahren zum Optimieren eines oder mehrerer Steuerparameter eines Systems, die durch eine Reihe von Werten (20a-20e) definiert sind, mit folgenden Schritten:
Ermitteln eines Feedbacks bei Verwendung einer gegebenen Reihe von Werten (20a-20e) durch das System;
paralleles Zuordnen einer Gewichtung zu jedem der Werte abhängig von dem Feedback; und
paralleles Erzeugen neuer Werte unter Berücksichtigung einer Zufallskomponente und der Gewichtung von jedem der Werte, wobei die Wahrscheinlichkeit, beim Erzeugen eines neuen Wertes wieder den gegebenen Wert zu erhalten, abhängig von der Gewichtung erhöht oder erniedrigt ist.

16. Computerprogramm mit einem Programmcode zur Durchführung des Verfahrens nach Anspruch 15, wenn das Program auf einem Computer abläuft.

## Claims

1. Apparatus for optimizing one or more control parameters of a system which are defined by a series of values (20a-20e), the apparatus comprising:
a means (32) for determining a feedback when a given series of values (20a-20e) is used by the system;
a means (34a-34c) for associating, in parallel, a weighting with each of the values (20a-20e) in dependence on the feedback; and
a means (34a-34c) for generating, in parallel, new values while taking into account a random component and the weight of each of the values, wherein the probability of again obtaining the given value when generating a new value is increased or decreased in dependence on the weighting.

2. Apparatus as claimed in claim 1, further comprising a means (32) for comparing the feedback to a reference feedback, and for determining a weighting for the values (20a-20e) in dependence on the comparison.

3. Apparatus as claimed in claim 2, wherein the reference feedback has a fixed value.

4. Apparatus as claimed in claim 2, wherein the reference feedback represents a currently best feedback.

5. Apparatus as claimed in claim 4, comprising a memory (30) for storing the currently best feedback and the associated series of values with which the currently best feedback was obtained.

6. Apparatus as claimed in claim 5, configured to newly determine, after a determined duration, the feedback of the best series of values, and to substitute it for the currently best feedback.

7. Apparatus as claimed in any of claims 1 to 6, additionally comprising a latch (38) configured to latch the series of values (20a-20e) before the feedback is determined.

8. Apparatus as claimed in any of claims 1 to 7, comprising several registers (36a-36c) configured to store the values and to make the series of values available via a data bus (44).

9. Apparatus as claimed in any of claims 1 to 8, wherein the means for generating new values in a parallel manner comprises several individual means, each of which is associated with one or more values.

10. Apparatus as claimed in claim 9, wherein the individual means (50) comprise a random means (56) for generating a random number.

11. Apparatus as claimed in claim 10, wherein the random means (56) comprises a linear feedback shift register.

12. Apparatus as claimed in any of claims 9 to 11, wherein the individual means (50) comprise a comparator (61) for comparing the random number to at least one counter reading (60a, 60b), which depends on several feedbacks, and a means (54) for generating the associated value on the basis of the comparison.

13. Apparatus as claimed in claim 12, wherein the individual means (50) comprise an updating means (52) for updating the counter reading (60a, 60b) on the basis of the feedback and of the value used for obtaining the feedback.

14. Apparatus as claimed in any of the previous claims, mounted in a radio station for optimizing the directional pattern of one or more antennas of same.

15. Method of optimizing one or more control parameters of a system which are defined by a series of values (20a-20e), the method comprising:
determining a feedback when a given series of values (20a-20e) is used by the system;
associating, in parallel, a weighting with each of the values in dependence on the feedback; and
generating, in parallel, new values while taking into account a random component and the weight of each of the values, wherein the probability of again obtaining the given value when generating a new value is increased or decreased in dependence on the weighting.

16. Computer program comprising a program code for performing the method as claimed in claim 15, when the program runs on a computer.

## Revendications

1. Dispositif pour optimiser un ou plusieurs paramètres de réglage d'un système définis par une série de valeurs (20a à 20e), aux caractéristiques suivantes:
un moyen (32) destiné à déterminer une information de retour en cas d'utilisation d'une série de valeurs donnée (20a à 20e) par le système;
un moyen (34a à 34c) destiné à associer en parallèle une pondération à chacune des valeurs (20a à 20e) en fonction de l'information de retour; et
un moyen (34a à 34c) destiné à générer en parallèle de nouvelles valeurs en tenant compte d'une composante aléatoire et de la pondération de chacune des valeurs, la probabilité, lors de la génération d'une nouvelle valeur, d'obtenir à nouveau la valeur donnée, étant augmentée ou diminuée en fonction de la pondération.

2. Dispositif selon la revendication 1, présentant par ailleurs un moyen (32) destiné à comparer l'information de retour avec une information de retour de référence et à déterminer une pondération pour les valeurs (20a à 20e) en fonction de la comparaison.

3. Dispositif selon la revendication 2, dans lequel l'information de retour de référence présente une valeur fixe.

4. Dispositif selon la revendication 2, dans lequel l'information de retour de référence représente une information de retour actuellement la meilleure.

5. Dispositif selon la revendication 4, présentant une mémoire (30) destinée à mémoriser l'information de retour actuellement la meilleure et la série de valeurs associée à laquelle a été obtenue l'information de retour actuellement la meilleure.

6. Dispositif selon la revendication 5, réalisé de manière à déterminer à nouveau, après une durée prédéterminée, l'information de retour de la meilleure série de valeurs et à remplacer l'information de retour actuellement la meilleure par cette dernière.

7. Dispositif selon l'une des revendications 1 à 6, comprenant en outre une mémoire intermédiaire (38) qui est réalisée de manière à mémoriser provisoirement la série de valeurs (20a à 20e) avant la détermination de l'information de retour.

8. Dispositif selon l'une des revendications 1 à 7, comprenant plusieurs registres (36a à 36c) qui sont réalisés de manière à mémoriser les valeurs et à mettre la série de valeurs à disposition via un bus un données (44).

9. Dispositif selon l'une des revendications 1 à 8, dans lequel le moyen destiné à générer en parallèle de nouvelles valeurs comprend différents moyens individuels qui sont associés, chacun, à une ou plusieurs valeurs.

10. Dispositif selon la revendication 9, dans lequel les moyens individuels (50) comprennent un moyen aléatoire (56) destiné à générer un nombre aléatoire.

11. Dispositif selon la revendication 10, dans lequel le moyen aléatoire (56) présente un registre à décalage d'informations de retour linéaire.

12. Dispositif selon l'une des revendications 9 à 11, dans lequel les moyens individuels (50) présentent un comparateur (61) destiné à comparer le nombre aléatoire avec au moins un état de compteur (60a, 60b) qui est fonction de plusieurs informations de retour, et un moyen (54) destiné à générer la valeur associée sur base de la comparaison.

13. Dispositif selon la revendication 12, dans lequel les moyens individuels (50) présente un moyen de mise à jour (52) destiné à mettre à jour l'état de compteur (60a, 60b) sur base de l'information de retour et de la valeur utilisée pour obtenir l'information de retour.

14. Dispositif selon l'une des revendications précédentes, placé dans une station de radiodiffusion pour optimiser la caractéristique directionnelle d'une ou de plusieurs antennes de cette dernière.

15. Procédé pour optimiser un ou plusieurs paramètres de réglage d'un système définis par une série de valeurs (20a à 20e), aux étapes suivantes consistant à:
déterminer une information de retour en cas d'utilisation d'une série de valeurs donnée (20a à 20e) par le système;
associer en parallèle une pondération à chacune des valeurs en fonction de l'information de retour; et
générer en parallèle de nouvelles valeurs en tenant compte d'une composante aléatoire et de la pondération de chacune des valeurs, la probabilité, lors de la génération d'une nouvelle valeur, d'obtenir à nouveau la valeur donnée, étant augmentée ou diminuée en fonction de la pondération.

16. Programme d'ordinateur avec un code de programme pour réaliser le procédé selon la revendication 15 lorsque le programme est exécuté sur un ordinateur.
